# DEMANDE DE BREVET EUROPEEN

(11) **EP 1 640 205 A2**
(43) Date de publication de la demande: **29.03.2006**
(21) Numéro de dépôt: 05300750.6
(22) Date de dépôt: 15.09.2005
(51) Int. Cl.: B60N 2/28, B60R 7/02

(54) **Dispositif d'accrochage de modules dans un véhicule**

(30) Priorité: 27.09.2004 FR 0452166
(71) Demandeur: Renault s.a.s., 92100 Boulogne Billancourt (FR)
(72) Inventeur: Blanc, Lionel, 92350 LE PLESSIS ROBINSON (FR)

(57) **Abrégé**

L'invention concerne un dispositif d'accrochage (1) situé la structure (2) d'une banquette (5) arrière d'un véhicule, constituée d'une assise (3) et d'un dossier (4) mobile, du type comportant un support (6) relié à ladite articulation (2), un fil métallique (7) relié audit support (6) et constitué d'une première extrémité (8) orientée vers l'avant du véhicule et situé entre l'assise (3) et le dossier (4) de ladite banquette (5), caractérisé en ce que ledit fil métallique (7) comporte une seconde extrémité (11) orientée vers l'arrière du véhicule formant une boucle métallique constituant un point d'accrochage destiné à coopérer avec des moyens de fixation (12) de modules (13) positionnés dans le compartiment arrière du véhicule.

## Description

L'invention concerne un dispositif d'accrochage de modules dans un véhicule. Plus particulièrement, le dispositif selon l'invention est destiné à l'accrochage de modules de part et d'autre d'une banquette de véhicule automobile, et notamment d'une banquette dont le dossier est articulé sur l'assise.

Certaines banquettes de véhicules automobiles sont pourvues de points d'accrochage destinés à servir de fixation pour un siège d'enfant par exemple. De manière connue, ces points d'accrochage sont constitués de fils métalliques formant une excroissance destinée à coopérer avec le moyen de fixation ou l'attache d'un module, d'un bac de rangement par exemple. De plus, ces fils métalliques sont montés par paires et fixés au niveau de la jonction assise / dossier d'une banquette de véhicule. Ils doivent en outre répondre aux conditions des normes de sécurités en vigueur. Notamment, la norme européenne ISOFIX impose un diamètre inférieur à 6,3 mm. Bien entendu, d'autres normes peuvent être utilisées comme référence, par exemple la norme australienne ADR34.

Ces normes de sécurité réglementent aussi les points d'accrochage situés dans le compartiment arrière, par exemple le coffre d'un véhicule automobile. Ceux-ci sont fixés au plancher du véhicule et sont destinés à recevoir des filets à bagages, des casiers ou tout autre module destiné à être fixé solidairement au véhicule. L'implantation de tels points d'accrochage nécessite des aménagements spécifiques du point de vue de l'architecture et de la structure du véhicule. La multiplication des points d'accrochage dans les différents compartiments d'un véhicule, aux places assises arrières ou dans le coffre n'est alors pas envisageable pour des raisons de coût, d'implantation et d'aspect.

L'objet de la présente invention vise à pallier ces inconvénients en proposant un dispositif d'accrochage de modules dans un véhicule comportant plusieurs points de fixation de manière à faciliter leur intégration dans l'architecture d'un véhicule.

La présente invention propose un dispositif d'accrochage situé sur la structure d'une banquette arrière d'un véhicule, constituée d'une assise et d'un dossier mobile, du type comportant un support relié à ladite articulation, un fil métallique relié audit support et constitué d'une première extrémité orientée vers l'avant du véhicule et situé entre l'assise et le dossier de ladite banquette, caractérisé en ce que ledit fil métallique comporte une seconde extrémité orientée vers l'arrière du véhicule formant une boucle métallique constituant un point d'accrochage destiné à coopérer avec des moyens de fixation de modules positionnés dans le compartiment arrière du véhicule.

Un des avantages de la présente invention est que d'une part le dispositif d'accrochage regroupe deux fonctions sur la même pièce et que d'autre part le sous-ensemble peut être monté facilement sur un élément de structure de la banquette en diminuant le nombre d'opération à effectuer pour ce poste de montage sur chaîne.

De préférence, le dispositif de d'accrochage de modules selon l'invention présente encore les caractéristiques suivantes :
- la première extrémité forme une boucle métallique constituant un point d'accrochage destinée à coopérer avec des moyens de fixation de modules positionnés sur l'assise de ladite banquette,
- le support est une plaquette métallique fixée sur le fil métallique et présentant une forme lui permettant de se positionner sur le moyen d'articulation de la banquette arrière,
- la première extrémité et la seconde extrémité formant chacune un point d'accrochage respectivement orienté vers l'avant et l'arrière du véhicule sont constituées par le même fil métallique fixé sur le support,
- la structure du dossier mobile de la banquette arrière du véhicule est une barre métallique recevant ledit dossier mobile et reliée à la caisse du véhicule par l'intermédiaire de supports,
- la barre métallique est libre en rotation suivant un axe parallèle à l'axe longitudinal de la banquette de sorte que le dispositif d'accrochage puisse suivre librement les mouvements de rotation du dossier sans en entraver le repliement, et
- le support est solidarisé au fil métallique par soudage et que ledit support et ledit fil constituent un sous-ensemble destiné à se fixer sur un élément de structure de la banquette.

La présente invention s'applique en outre à un procédé de fixation d'un dispositif d'accrochage opérant en préformant le fil métallique à la première extrémité et à la deuxième extrémité, en soudant le support sur le fil métallique, et en centrant et soudant le sous-ensemble sur la barre métallique dans une position prédéfinie.

La présente invention sera mieux comprise à l'étude d'un mode de réalisation pris à titre d'exemple nullement limitatif et illustré par lés dessins annexés, sur lesquels :
- la figure 1 est une représentation schématique du dispositif selon l'invention mis en situation avec une banquette arrière de véhicule ;
- la figure 2 est une représentation schématique du dispositif d'accrochage de modules dans un véhicule ;
- la figure 3 est une représentation schématique d'un sous-ensemble de fixation ; et
- la figure 4 est une représentation schématique du dispositif coopérant avec des modules.

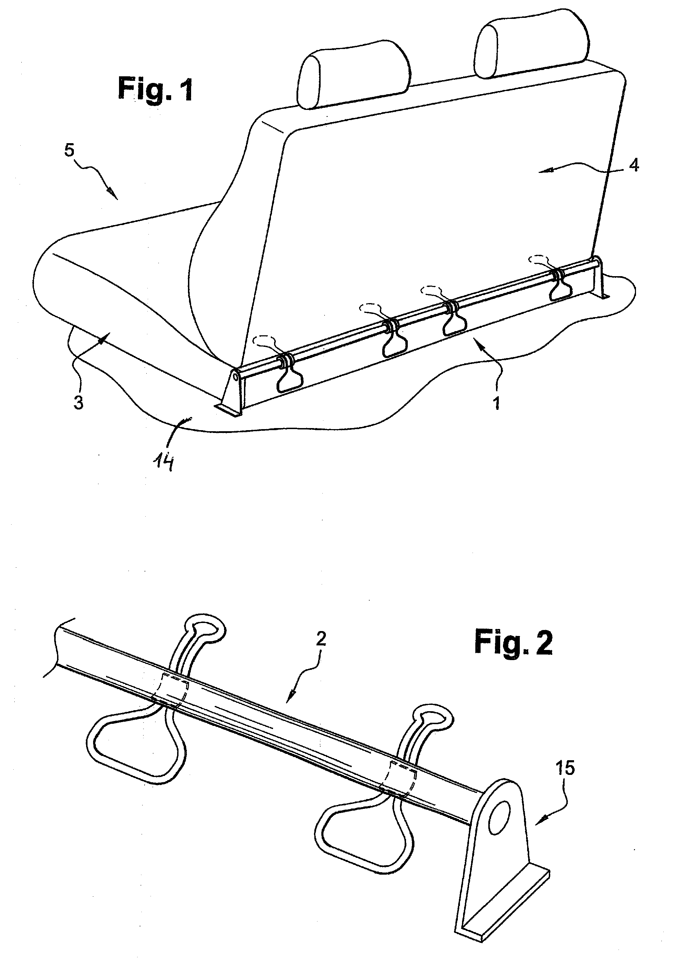

Le dispositif d'accrochage 1 selon l'invention, tel qu'il est représenté sur la figure 1, est positionné par exemple sur le moyen d'articulation 2 d'une banquette arrière 5 d'un véhicule automobile. Le dispositif d'accrochage 1 est plus particulièrement fixé sur la barre d'articulation 2 permettant le mouvement de rotation du dossier 4 de la banquette 5 par rapport à l'assise 3 de la banquette 5. La barre d'articulation 2 est fixée à la caisse du véhicule 14 par l'intermédiaire de supports métalliques 15.

La barre métallique d'articulation 2 telle que représentée sur la figure 2, présente au moins un moyen de fixation 1 sur sa longueur de façon à coopérer avec plusieurs modules de part et d'autre du dossier 4. En effet, le moyen de fixation 1 présente plusieurs extrémités : une première extrémité 8 orientée vers l'avant du véhicule coopère avec des moyens de fixation 9 de modules 10 positionnés sur l'assise de la banquette 5, et une seconde extrémité 11 orientée vers l'arrière du véhicule coopère avec des moyens de fixation 12 de modules 13 positionnés derrière le dossier 4 de la banquette 5, dans le compartiment arrière du véhicule. Un des avantages de la présente invention est de regrouper en une seule pièce deux points de fixation dans des compartiments différents du véhicule.

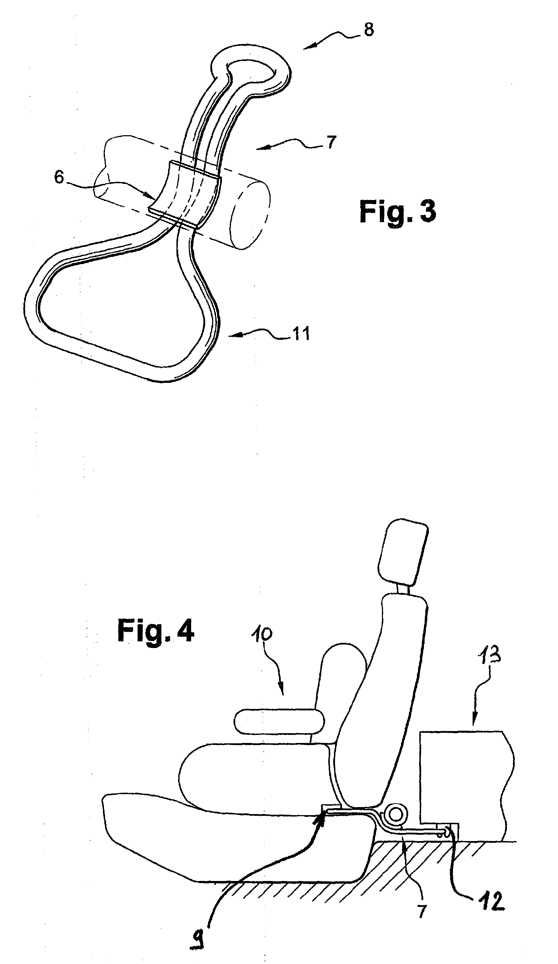

La figure 3 représente le fil métallique 7 permettant d'associer ces deux points d'accrochage. Le fil métallique 7 est constitué de deux extrémités 8 et 11 formant chacune une boucle destinée à coopérer avec des moyens de fixation de modules. Ces modules peuvent être des sièges pour enfants, des caissons de transport, des bacs de rangement ou des filets de retenue. Le fil métallique 7 est fixé sur un support 15 dont la forme permet de centrer le sous-ensemble fil-support 16 sur la barre métallique 2. Le support 15 est fixé entre les deux extrémités 8 et 11 du fil métallique 7. De par sa forme complémentaire de celle de la barre métallique 2, le support 15 se monte facilement par soudage. De plus, le sous-ensemble 16 peut être pré assemblé de façon à réduire le nombre d'opérations de montage d'un tel dispositif. Un des avantages de ce dispositif d'accrochage 1 est que le nombre de pièces est réduit par rapport à un système d'accrochage classique. En effet, les points d'accrochages de la banquette et du compartiment arrière qui étaient à l'origine dissociés, sont regroupés en une seule pièce, ce qui permet de réduire les coûts de fabrication relatifs à la conception et à l'implantation de tels systèmes.

La figure 4 est une représentation schématique du dispositif d'accrochage 1 qui est relié à différents modules 10 et 13 situés respectivement sur la banquette et dans le compartiment arrière du véhicule. Le dispositif de blocage 1 est monté sur la barre d'articulation 2 qui est libre en rotation. Ainsi, lorsque les boucles métalliques 8 et 11 sont libres, elles suivent le mouvement de rotation du dossier 4 lorsque celui-ci se rabat sur l'assise 3 de façon à ne pas entraver le mouvement de repliement de la banquette 5.

De manière avantageuse et selon un autre mode de réalisation de l'invention, le dispositif d'accrochage 1 peut être fixé soit sur la structure de l'assise 3 ou du dossier 4, lorsque ces deux éléments sont indépendants l'un de l'autre. Ainsi, l'utilisateur peut accrocher des modules 10 et 13 quand la banquette arrière du véhicule est repliée. Un des avantages de ce mode de réalisation est de pouvoir répartir l'accrochage de différents modules 10 et 13 sur les structures de l'assise 3 et du dossier 4.

## Revendications

1. Dispositif d'accrochage (1) situé sur la structure (2) d'une banquette (5) arrière d'un véhicule, constituée d'une assise (3) et d'un dossier (4) mobile, du type comportant
- un support (6) relié à ladite articulation (2),
- un fil métallique (7) relié audit support (6) et constitué d'une première extrémité (8) orientée vers l'avant du véhicule et situé entre l'assise (3) et le dossier (4) de ladite banquette (5),
**caractérisé en ce que** ledit fil métallique (7) comporte une seconde extrémité (11) orientée vers l'arrière du véhicule formant une boucle métallique constituant un point d'accrochage destiné à coopérer avec des moyens de fixation (12) de modules (13) positionnés dans le compartiment arrière du véhicule.

2. Dispositif d'accrochage (1) selon la revendication 1, **caractérisé en ce que** la première extrémité (8) forme une boucle métallique constituant un point d'accrochage destinée à coopérer avec des moyens de fixation (9) de modules (10) positionnés sur l'assise (3) de ladite banquette (5).

3. Dispositif d'accrochage (1) selon l'une des revendications 1 ou 2, **caractérisé en ce que** le support (6) est une plaquette métallique fixée sur le fil métallique (7) et présentant une forme lui permettant de se positionner sur la structure (2) de la banquette arrière (5).

4. Dispositif d'accrochage (1) selon l'une des revendications précédentes, **caractérisé en ce que** la première extrémité (7) et la seconde extrémité (11) formant chacune un point d'accrochage respectivement orienté vers l'avant et l'arrière du véhicule sont constituées par le même fil métallique (8) fixé sur le support (6).

5. Dispositif d'accrochage (1) selon l'une des revendications précédentes, **caractérisé en ce que** la structure (2) du dossier (4) mobile de la banquette (5) arrière du véhicule est une barre métallique recevant ledit dossier (4) mobile et reliée à la caisse (14) du véhicule par l'intermédiaire de supports (15).

6. Dispositif d'accrochage (1) selon l'une des revendications précédentes, **caractérisé en ce que** la barre métallique (2) est libre en rotation suivant un axe parallèle à l'axe longitudinal de la banquette (5) de sorte que le dispositif d'accrochage (1) puisse suivre librement les mouvements de rotation du dossier (4) sans en entraver le repliement.

7. Dispositif d'accrochage (1) selon l'une des revendications précédentes, **caractérisé en ce que** le support (6) est solidarisé au fil métallique (7) par soudage et que ledit support (6) et ledit fil (7) constituent un sous-ensemble (16) destiné à se fixer sur un élément de structure de la banquette (5).

8. Procédé de fixation d'un dispositif d'accrochage selon l'une des revendications précédentes, le procédé opérant :
- en préformant le fil métallique (7) à la première extrémité (8) et à la deuxième extrémité (11),
- en soudant le support (6) sur le fil métallique (7),
- en centrant et soudant le sous-ensemble (16) sur la barre métallique (2) dans une position prédéfinie.
